# EUROPÄISCHE PATENTSCHRIFT

(11) **EP 0 280 201 B1**
(45) Veröffentlichungstag und Bekanntmachung des Hinweises auf die Patenterteilung: **01.09.1993**
(21) Anmeldenummer: 88102403.8
(22) Anmeldetag: 19.02.1988
(51) Int. Cl.: F16D 23/04, F16D 69/00

(54) **Verfahren zum Herstellen eines Synchronringes**
Method of manufacturing a synchro ring
Procédé de fabrication d'un anneau de synchronisation

(30) Priorität: 21.02.1987 DE 3705658
(43) Veröffentlichungstag der Anmeldung: 31.08.1988
(73) Patentinhaber: ZWN ZAHNRADWERK NEUENSTEIN GMBH & CO., D-74632 Neuenstein (DE); Miba Sintermetall Aktiengesellschaft, A-4663 Laakirchen (AT)
(72) Erfinder: Gramberger, Johann, A-4902 Wolfsegg (AT); Mairhofer, Ferdinand, A-4810 Gmunden (AT)
(74) Vertreter: Witte, Alexander, Dr.-Ing.

(56) Entgegenhaltungen:
- GB-A- 761 417
- US-A- 2 395 189
- US-A- 3 306 401

## Beschreibung

Die Erfindung betrifft ein Verfahren nach den Oberbegriffen der Ansprüche 1 und 2.

Ein Verfahren der vorstehend genannten Art ist aus der DE-C-34 17 813 bekannt.

Die bei Sinterkörpern auftretenden Werkstoffporen bringen beim Einsatz von solchen Werkstoffen für Reibbeläge Vorteile mit sich, die bei Reibscheiben mit einer ebenen Reibfläche einfach ausgenützt werden können, weil das aus verschiedenen Komponenten bestehende Sinterpulver genau dosiert auf den Scheibenkörper aufgebracht und in einer Reihe von Verfahrensschritten gesintert und verdichtet werden kann, wobei sich beim Sintern eine gute Verbindung zwischen dem Reibbelag und dem Scheibenkörper ergibt.

Reibringe, wie sie bei Synchronisiereinrichtungen von Schaltgetrieben Verwendung finden, werden üblicherweise jedoch nicht mit Reibbelägen aus einem Sinterwerkstoff versehen, weil bereits das Auftragen des Sinterpulvers auf die zylindrische oder konische Reibfläche Schwierigkeiten bereitet und ein Verdichten der aufgebrachten Pulverschicht über eine axiale Druckstempelbewegung nicht möglich ist.

Um trotzdem Synchronringe mit einem Streusinter-Reibbelag ausrüsten zu können, ist es aus der eingangs genannten DE-C-34 17 813 bekannt, den Reibbelag in einer herkömmlichen Weise auf ein ebenes Trägerblech aufzusintern und dann dieses Trägerblech nach einem Biegen entsprechend der geometrischen Form der Reibfläche des Synchronringes mit dem Stützring durch ein Punktschweißen zu verbinden.

Nachteilig bei diesen bekannten Synchronringen ist allerdings, daß durch das Punktschweißen eine ungleichmäßige Wärmebelastung des Stützringes mit der Gefahr von Wärmespannungen auftritt, daß aufgrund der Federwirkung des Trägerbleches zwischen den Schweißstellen ein genaues Nacharbeiten des Reibbelages nicht möglich ist und daß in der Praxis wegen der bei vorgegebenen Stützringabmessungen um die Dicke des Trägerbleches verminderten Stärke des Sinterwerkstoffes keine engen Fertigungstoleranzen eingehalten werden können.

Aus der eingangs weiter genannten DE-A-21 39 386 ist zwar bekannt, zur Herstellung eines Reibkörpers zunächst einen Preßling herzustellen, der aus einem Sinterpulver unter Einwirkung von Druck erzeugt wird, den Preßling dann vorzusintern und schließlich auf einen Stützkörper aufzusintern. Allerdings bezieht sich das bekannte Verfahren nach der Zusammensetzung der verwendeten Sinterpulver auf die Herstellung von Bremsscheiben, also ebenfalls ebenen Reibkörpern, bei denen es auf die Einstellung bestimmter Reibbeiwerte nicht ankommt. Bei Bremsscheiben wird nämlich die erforderliche Reibung durch mehr oder weniger starkes Betätigen der Bremse erzeugt. Die bei der Herstellung von Bremsscheiben bekannten Verfahren sind damit für die Herstellung von Reibkörpern anderer Art nicht übertragbar.

Aus der DE-U-73 42 680 ist ein Verfahren zum Herstellen eines Synchronringes aus Sinterstahl bekannt, bei dem eine konische Innenbohrung mit einer Molybdänschicht im Plasmasprüh-Verfahren beschichtet wird.

Aus der DE-A-27 44 994 ist bekannt, einen Synchronring an einer konischen Oberfläche eines aus Metall, Kunststoff oder Sintermaterial bestehenden Ringkörpers mit einem Reibbelag zu versehen, der auf organischer Grundlage, vorzugsweise aus Papier, Baumwolle u. dgl., hergestellt wird.

Aus dem Dokument US-A-3 306 401 ist ein berylliumhaltiges Reibelement bekannt, wie es für Bremsen oder Kupplungen eingesetzt werden soll. Nach einem in diesem Dokument beschriebenen Ausführungsbeispiel wird ein pulverförmiges Reibmaterial zunächst in einem getrennten Arbeitsgang kaltgepreßt, so daß ein sogenannter "Grünling" entsteht. In einem zweiten Arbeitsgang wird der Grünling in einer heizbaren Presse auf ein Blech unter Druck aufgesintert. Das so entstehende Element wird dann in einem weiteren Arbeitsgang ebenfalls unter Druck auf eine Trägerlamelle aufgelötet. Bei diesem bekannten Verfahren werden ausschließlich plane Elemente verwendet, deren Formgebung sich - abgesehen von einer beim Pressen eintretenden Verdichtung - im Verlaufe des Verfahrens nicht ändert.

Aus dem Dokument US-A-2 395 189 ist ein Synchronring bekannt. Zur Herstellung dieses Synchronrings wird zunächst ein flaches Blech mit einer Reibmaterialschicht ausreichender Dicke verbunden. Von welcher Art das Reibmaterial ist und wie die Verbindung im einzelnen hergestellt wird, ist in dem Dokument nicht im einzelnen angegeben. Nach dem Aufbringen der Reibmaterialschicht werden aus dem Blech kreisbogenförmige Streifen herausgestanzt, deren äußere Kreisbogenlänge dem Umfang am größeren Ende eines herzustellenden konischen Synchronrings entspricht. Die kreisbogenförmigen Streifen werden dann eingerollt und an ihren Enden miteinander verbunden, so daß ein konischer Synchronring entsteht. Der konische Synchronring wird dann mit seiner Blechseite in eine innenkonische Aufnahme eines metallischen Stützringes eingepreßt. Dieses bekannte Verfahren ist bei solchen Reibelementen einsetzbar, bei denen das Trägermaterial bzw. der Stützring so dünn ausgebildet sind, daß ein nachträgliches Umformen möglich ist.

Aus dem Dokument GB-A-761 417 ist ein Verfahren zur Herstellung beschichteter Gegenstände, insbesondere von Kupplungsscheiben oder Bremsbändern, bekannt. Das Dokument beschreibt einleitend als Alternativen die bekannten Verfahren des Streusinterns sowie des Foliensinterns. Unter Streusintern wird dabei verstanden, daß ein loses Pulver auf den zu beschichtenden Gegenstand aufgestreut und dann angesintert und gepreßt wird. Unter Foliensintern wird hingegen verstanden, daß aus einem als Beschichtung dienenden Metallpulver zunächst ein separater Sinterkörper hergestellt wird, der die Form des zu beschichtenden Gegenstandes aufweist, auf den dieser Sinterkörper dann später durch Pressen und Sintern aufgebracht wird. Im einzelnen beschreibt das Dokument dann ein Foliensinter-Verfahren, wonach aus einer Pulvermischung durch Ausrollen, d.h. Pressen, ein flächiges Zwischengebilde hergestellt wird, das auch gesintert werden kann. Aus diesem Zwischengebilde, nämlich der sogenannten Folie, wird dann durch Aufstanzen ein ebener, kreisringförmiger Körper hergestellt, der dann in einem weiteren Verfahrensschritt an eine ebenfalls ebene Stahllamelle angesintert wird.

Aus dem Dokument FR-A-1 570 493 ist schließlich noch ein Verfahren zum Herstellen von metallischen Trägerkörpern mit Sinterbelag, insbesondere von Kupplungs- oder Bremslamellen, bekannt. Auch in diesem Dokument werden einleitend zwei bekannte Verfahren, nämlich das Foliensintern und das Drucksintern beschrieben, wobei unter letztgenanntem ein Verfahren, ähnlich dem bereits erwähnten Streusintern, verstanden wird, jedoch mit der Abweichung, daß das auf die Unterlage aufgestreute Pulver vor dem Ansintern aufgepreßt wird. Im einzelnen beschäftigt sich das Dokument dann mit einem Streusinter-Verfahren, wobei die Besonderheit darin besteht, daß das lose aufgestreute und anschließend angesinterte Pulver nach dem Sintern durch Pressen verdichtet wird. Auf diese Weise werden also ebenfalls ebene Bauelemente, nämlich Kupplungs- oder Bremslamellen, hergestellt, deren ebene Bauform es gestattet, das Reibpulver für den Sinterreibbelag durch Aufstreuen aufzubringen und wobei dann schließlich die lose aufgestreute Pulverschicht anschließend angesintert und dann durch Pressen verdichtet wird.

Der Erfindung liegt demgegenüber die Aufgabe zugrunde, ein Herstellungsverfahren für einen Synchronring bzw. einen Reibkörper der eingangs genannten Art anzugeben, mit dessen Hilfe der Stützring in einfacher Weise mit einem Reibbelag aus einem Sinterwerkstoff versehen werden kann, ohne den Sinterwerkstoff auf einen gesonderten Träger aufbringen und diesen Träger mit dem Stützring verbinden zu müssen.

Diese Aufgabe wird erfindungsgemäß bei einem Verfahren der eingangs genannten Art zum einen durch die Merkmale des kennzeichnenden Teils des Anspruchs 1 und zum anderen durch die Merkmale des kennzeichnenden Teils des Anspruchs 2 gelöst.

Da durch ein Vorsintern oder ein Abbinden mittels eines Bindemittels aus dem vorgegebenen Sinterpulver ein selbsttragender Formstreifen erhalten werden kann, der eine für die Weiterverarbeitung ausreichende Druckfestigkeit aufweist, kann für die Herstellung des Reibbelages ein gesondertes Trägerblech entfallen und der aus dem Sinterwerkstoff vorgefertigte Formstreifen unmittelbar in den Stützring eingepreßt und unter inniger Verbindung mit dem Stützring gesintert werden. Es wird dabei eine ganzflächige Verbindung zwischen dem Reibbelag und dem Stützring sichergestellt, die nicht nur allen auftretenden Belastungen gerecht wird, sondern auch eine sonst sich zwischen den Verbindungsteilen ergebende, federnde Abstützung vermeidet, was sich unmittelbar in einer verbesserten Fertigungstoleranz bei einer Nachbearbeitung der Reibfläche niederschlägt. Außerdem braucht bei der Bemessung des Reibbelages die Dicke des Trägerbleches nicht berücksichtigt zu werden, so daß die Dicke der Sinterpulverschicht bei der Herstellung des selbsttragenden Formstreifens entsprechend größer gewählt werden kann. Damit können die Dichte des Sinterwerkstoffes und mit der Dichte die angestrebte Porosität erheblich genauer gesteuert werden, weil sich Ungleichmäßigkeiten beim Auftrag des Sinterpulvers bei größeren Schichtstärken weniger nachteilig auswirken können. In diesem Zusammenhang ist zu berücksichtigen, daß die auf einer Unterlage aufgebrachte Sinterpulverschicht ja auf die gewünschte Schichtstärke verdichtet werden muß. Schließlich wird auch das Einarbeiten von Verdrängungsnuten für ein Schmiermittel bei einer größeren Dicke des Reibbelages einfacher.

Die um die Dicke des Trägerbleches größere Schichtstärke eines trägerlosen, selbsttragenden Formstreifens bietet die Möglichkeit, den Formstreifen selbst mehrschichtig aufzubauen und beispielsweise auf der dem Stützring zugekehrten Seite mit einer Haftvermittlungsschicht zu versehen, so daß die jeweiligen Verhältnisse beim Übergang vom Reibbelag auf den Stützring durch die Haftvermittlungsschicht besonders berücksichtigt werden können. So stellt die Haftvermittlungsschicht insbesondere einen Ausgleich zwischen unterschiedlichen thermischen Ausdehnungskoeffizienten bzw. Härten des Stützringes einerseits und des Sinter-Reibbelages andererseits dar.

Der Reibbelag, der entweder aus einzelnen Segmenten zusammengesetzt oder durch einen der Umfangslänge der Reibfläche entsprechenden Formstreifen gebildet werden kann, kann in einfacher Weise dadurch hergestellt werden, daß nach einem Vorsintern des auf eine ebene Unterlage aufgebrachten und verdichteten Sinterpulvers der erhaltene, selbsttragende Formstreifen beschnitten und gebogen wird, um dann in den Stützring eingepreßt und fertiggesintert zu werden. Die Formstreifen können dabei vorteilhaft mittels Biegewalzen gebogen werden, zwischen denen die beschnittenen, ebenen Formstreifen hindurchgefördert werden.

Eine andere Möglichkeit des Biegens der plan vorgefertigten Formstreifen gemäß der geforderten geometrischen Form der Reibfläche besteht darin, die beschnittenen Formstreifen während des Einpressens in den Stützring zu biegen, was in der Praxis Segmentstreifen voraussetzt. Mit einem solchen Verfahrensschritt erübrigt sich eine gesonderte Biegebearbeitung der beschnittenen Formstreifen. Besonders günstige Verhältnisse werden geschaffen, wenn der Stützring ebenfalls gesintert wird und die vorgefertigten Formstreifen in die Formpresse für den Stützring eingelegt werden, um beim Verpressen des Stützringes mit diesem geformt und anschließend gemeinsam gesintert zu werden. Je größer die Anzahl der zum Reibbelag zusammengesetzten Streifensegmente ist, umso einfacher ist deren Verformung.

Es versteht sich, daß die vorstehend genannten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen nach dem erfindungsgemäßen Verfahren hergestellten Reibring mit einem gesinterten Reibbelag, ausschnittsweise und in einem zur Symmetrieachse senkrechten Schnitt;
- Fig. 2: eine Anlage zur Herstellung der für den Reibbelag erforderlichen Formstreifen in einem schematisierten Blockschaltbild.

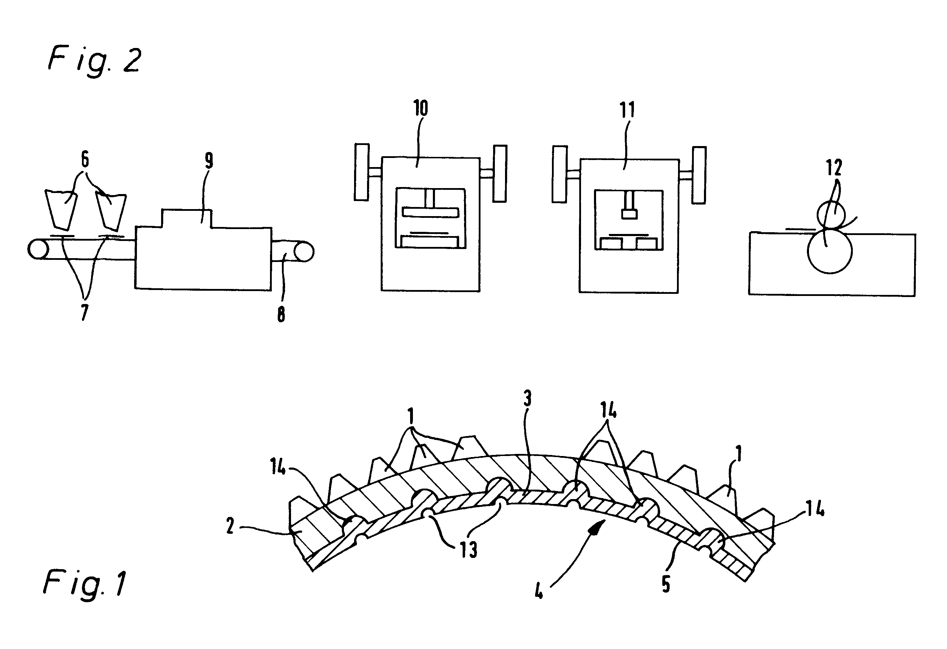

Fig. 1 zeigt einen Synchronring einer Synchronisiereinrichtung eines Handschaltgetriebes eines Kraftfahrzeuges. Der Synchronring ist an einer äußerem umlaufenden Oberfläche mit Zähnen versehen und hat eine innen umlaufende Reibfläche. Es versteht sich jedoch, daß der Synchronring ebenso mit Zähnen an einer inneren umlaufenden Oberfläche versehen sein kann, während eine Reibfläche auf einer äußeren umlaufenden Oberfläche ausgebildet ist. Es können jedoch Reibflächen und Zähnen auch an beiden umlaufenden Oberflächen des Ringes angeordnet sein.

Beim Ausführungsbeispiel der Fig. 1 umfaßt der Synchronring einen Stützring 2 aus Metall oder einem Sinterpulver. Der Stützring 2 kann durch Schmieden, Gießen, Sintern oder in sonstiger Weise hergestellt sein, wie dies an sich bekannt ist. Um eine umlaufende Reibfläche zu erhalten, ist der Stützring 2 mit einem Reibring 4 versehen, der aus Sinterpulver hergestellt wurde. Während des Herstellprozesses wird das Sinterpulver zunächst in eine Form gegeben und gepreßt, um einen streifenförmigen Körper aus Sinterpulver zu erhalten. Der Körper aus Sinterpulver wird dann vorgesintert, um einen selbsttragenden und mechanisch stabilen Reibkörper zu erhalten. Der Reibkörper wird dann auf Maß geschnitten und in den Stützring eingelegt, so daß eine äußere umlaufende Oberfläche des Reibkörpers an einer entsprechenden inneren umlaufenden Oberfläche des Stützringes 2 zur Anlage kommt. Der Stützring 2 wird dann zusammen mit dem Reibkörper gesintert, so daß der Reibring 4 ausgebildet wird, wie dies in Fig. 1 erkennbar ist. In Fig. paßt der Reibkörper 5 gerade in den Stützring 2 und wird dort infolge der Sinterverbindung zwischen Reibkörper und Stützring 2 mechanisch stabil gehalten.

Im Falle daß der Stützring 2 ebenfalls aus einem Sinterpulver hergestellt ist, kann man einen vorgesinterten Stützring 2 verwenden und einen vorgesinterten Reibkörper mit diesem zusammenfügen und die beiden Elemente dann zusammen sintern.

Zur Herstellung des Formstreifens 5 wird gemäß Fig. 2 zunächst das Sinterpulver über entsprechende Dosiereinrichtungen 6 auf eine Unterlage 7 aufgestreut und mittels eines Förderers 8 durch einen Sinterofen 9 geführt, in dem das streifenförmig aufgetragene Sinterpulver vorgesintert wird, um einen selbsttragenden, für die Weiterbehandlung ausreichend druckfesten Formstreifen zu erhalten. Der Formstreifen wird anschließend in einer Presse 10 verdichtet und mit einer Stanzvorrichtung 11 maßhaltig beschnitten. Der so vorbereitete Formstreifen 5 kann dann zwischen Biegewalzen 12 hindurchgeführt und entsprechend der Ringfläche 3 gebogen werden. Nach einem Einpressen der vorgeformten Formstreifen 5 in den Stützring 2 können die Formstreifen 5 unter einer gleichzeitigen Verbindung mit dem Stützring 2 fertiggesintert werden. Beim Einpressen der Formstreifen 5 in den Stützring 2 können Schmiermittelnuten 13 in den Reibbelag 4 eingeprägt werden, wobei der Werkstoff der Formstreifen 5 in entsprechende, nutenartige Ausnehmungen 14 des Stützringes 2 verdrängt wird. Die ganzflächige Verbindung zwischen dem Stützring 2 und dem Reibbelag 4 bleibt somit gewahrt.

Nach dem Sintern der Formstreifen 5 kann der Reibbelag 4 noch spanabhebend nachbearbeitet werden, um besonders hohen Genauigkeitsanforderungen entsprechen zu können.

Die Formstreifen 5 können ein- oder mehrschichtig aufgebaut sein. Zu diesem Zweck braucht lediglich für einen schichtenweisen Auftrag des Sinterpulvers auf die Unterlagen 4 über hintereinander geschaltete Dosiereinrichtungen 6 gesorgt zu werden, wobei über eine unterschiedliche Verdichtung der einzelnen Schichten auch eine unterschiedliche Porosität erreicht werden kann. Dieser schichtenartige Aufbau der Formstreifen 5 kann helfen, eine besonders innige Verbindung zwischen dem Stützring 2 und dem Formstreifen 5 herzustellen.

Anstelle einer Vorsinterung der Formstreifen 5 in einem Sinterofen 9 können die Sinterpulver auch durch ein geeignetes Bindemittel zu ausreichend druckbeständigen Formstreifen gebunden werden. Es kommt lediglich darauf an, daß die Formstreifen eine entsprechende Dichte aufweisen und in den Stützring 2 eingepreßt werden können. Die Sinterung des Reibbelages 4 erfolgt nach dem Einpressen der Formstreifen 5 in den Stützring 2.

Es versteht sich, daß nicht zwangsläufig von einem ebenen Formstreifen ausgegangen werden muß. Bleibt die Umfangslänge der segmentförmigen Formstreifen begrenzt, so kann das Sinterpulver auch auf eine entsprechend gekrümmte Unterlage aufgestreut oder aufgestrichen werden, weil die notwendige Verdichtung des Sinterkörpers in einem solchen Falle noch keine besonderen Schwierigkeiten macht.

## Patentansprüche

1. Verfahren zum Herstellen eines ringförmigen Reibkörpers, bei dem ein aus einem verdichteten Sinterpulver durch Vorsintern vorgefertigter Reibbelag (4) auf einen Stützkörper (2) aufgesintert wird, dadurch gekennzeichnet, daß der vorgefertigte Reibbelag (4) als selbsttragender, druckbeanspruchbarer Formstreifen (5) gefertigt wird, der auf eine konische Fläche eines Stützringes (2) eines Synchronringes aufgepreßt und danach fertiggesintert wird.

2. Verfahren zum Herstellen eines ringförmigen Reibkörpers, bei dem ein aus einem Sinterpulver vorgefertigter Reibbelag (4) auf einen Stützkorper (2) aufgesintert wird, dadurch gekennzeichnet, daß der vorgefertigte Reibbelag (4) als mittels eines Bindemittels abgebundener, selbsttragender, druckbeanspruchbarer Formstreifen (5) gefertigt wird, der auf eine konische Fläche eines Stützringes (2) eines Synchronringes aufgepreßt und danach aufgesintert wird.

3. Verfahren nach Anspruch 1, gekennzeichnet durch die Verfahrensschritte:
- Dosiertes Aufstreuen des Sinterpulvers auf eine Unterlage (7);
- Vorsintern des auf die Unterlage (7) aufgestreuten Sinterpulvers zum Erzeugen des Formstreifens (5);
- Zuschneiden des Formstreifens (5) auf ein vorgegebenes Maß;
- gleichzeitiges Umbiegen und Einpressen des zugeschnittenen Formstreifens (5) auf die konische Fläche (3); und
- Sintern des Stützringes (2) mit eingepreßtem Formstreifen (5).

4. Verfahren nach Anspruch 2, gekennzeichnet durch die Verfahrensschritte:
- Abbinden des Sinterpulvers mittels des Bindemittels und Herstellen des Formstreifens (5) daraus;
- gleichzeitiges Umbiegen um Einpressen des Formstreifens (5) auf die konische Fläche (3); und
- Sintern des Stützringes 2 mit eingepreßtem Formstreifen (5).

5. Verfahren nach einem der Ansprüche 1 - 4, dadurch gekennzeichnet, daß beim Einpressen des Formstreifens (5) zugleich Schmiermittelnuten (13) in die außenliegende Oberfläche des Formstreifens (5) eingepreßt werden.

6. Verfahren nach einem oder mehreren der Ansprüche 1 - 5, dadurch gekennzeichnet, daß der selbsttragende Formstreifen (5) auf der dem Stützring (2) zugekehrten Seite mit einer Haftvermittlungsschicht versehen wird.

## Claims

1. A method of manufacturing a ring-shaped frictional body comprising the sintering of a frictional lining (4), having been prefabricated from a compressed sinter powder by presintering, on a support body (2), characterized in that the prefabricated frictional lining (4) is manufactured as a self-supporting, pressure-resistant form strip (5) being pressed on a conical surface of a supporting ring (2) of a synchronising ring and is fully sintered thereafter.

2. A method of manufacturing a ring-shaped frictional body comprising the sintering of a frictional lining (4), having been prefabricated from a sinter powder, on a support body (2), characterized in that the prefabricated frictional lining (4) is manufactured as a self-supporting, pressure-resistant form strip (5) having been cured by a binding agent and being pressed on a conical surface of a supporting ring (2) of a synchronizing ring and is fully sintered thereafter.

3. The method of claim 1, characterized by the steps of:
- dosed spreading of the sintering powder on a base (7);
- presintering the spreaded sintering powder on the base (7) for generating the form strip (5);
- cutting the form strip (5) in a predetermined dimension;
- simultaneous bending and pressing of the cut form strip (5) on the conical surface; and
- sintering the support ring (2) together with the form strip (5) pressed therein.

4. The method of claim 2, characterized by the step of:
- binding the sintering powder by means of the binding agent and generating the form strip (5) thereof;
- simultaneous bending and pressing of the form strip (5) on the conical surface (3); and
- sintering the support ring (2) together with the form strip (5) pressed therein.

5. The method of any of claims 1 - 4, characterized in that during the pressing-in of the form strip (5) lubricating grooves (13) are pressed into the outer surface of the form strip (5).

6. The method of any of claims 1 - 5, characterized in that the self-supporting form strip (5) is provided with an adhesion layer on the side facing the supporting ring (2).

## Revendications

1. Procédé de fabrication d'un corps de friction annulaire, dans lequel une garniture de friction (4) préfabriquée par préfrittage d'une poudre de frittage densifiée est agglomérée par frittage sur un corps de support (2), caractérisé en ce que la garniture de friction préfabriquée (4) est réalisée sous forme de bande moulée (5) auto-porteuse et résistant à la pression, qui est emmanchée puis agglomérée par frittage sur une surface conique d'un anneau support (2) d'un anneau de synchronisation.

2. Procédé de fabrication d'un corps de friction annulaire, dans lequel une garniture de friction (4) préfabriquée en une poudre de frittage est agglomérée par frittage sur un corps de support (2), caractérisé en ce que la garniture de friction préfabriquée (4) est réalisée sous forme de bande moulée (5) auto-porteuse, résistant à la pression et durcie au moyen d'un liant, qui est emmanchée puis agglomérée par frittage sur une surface conique d'un anneau support (2) d'un anneau de synchronisation.

3. Procédé selon la revendication 1, caractérisé en ce qu'il comprend les étapes suivantes :
- Application dosée de la poudre de frittage sur un support (7) ;
- Préfrittage de la poudre de frittage répandue sur le support (7) en vue d'obtenir la bande moulée (5) ;
- Découpage de la bande moulée (5) à des cotes prédéterminées ;
- Cintrage et emmanchement simultanés de la bande moulée (5) découpée sur la surface conique (3) ; et
- Frittage de l'anneau support (2) avec la bande moulée emmanchée (5).

4. Procédé selon la revendication 2, caractérisé en ce qu'il comprend les étapes suivantes :
- Durcissement de la poudre de frittage au moyen du liant et fabrication de la bande moulée (5) à partir de ladite poudre de frittage durcie ;
- Cintrage et emmanchement simultanés de la bande moulée (5) sur la surface conique (3) ; et
- Frittage de l'anneau support (2) avec la bande moulée emmanchée (5).

5. Procédé selon l'une des revendications 1 à 4, caractérisé en ce que des rainures d'évacuation de lubrifiant (13) sont empreintes dans la surface externe de la bande moulée emmanchée (5) lors de l'emmanchement de la bande moulée (5).

6. Procédé selon l'une des revendications 1 à 5, caractérisé en ce que la face de la bande moulée auto-porteuse (5) qui est orientée vers l'anneau support (2) est dotée d'une couche adhésive.
